# EUROPÄISCHE PATENTSCHRIFT

(11) **EP 2 093 008 B1**
(45) Veröffentlichungstag und Bekanntmachung des Hinweises auf die Patenterteilung: **20.04.2011**
(21) Anmeldenummer: 08105163.3
(22) Anmeldetag: 27.08.2008
(51) Int. Cl.: B23K 3/06, B65H 16/02, B65H 49/20, B65H 49/32, B65H 75/02, B65H 75/14

(54) **Halterung für eine Lötzinnrolle mit bezüglich einer Grundplatte verschiebbaren Seitenwänden und Vorsprünge zum Aufnehmen der Lötzinnrolle**
Dispenser for a tin soldering roller with sideplates slidable relative to a base and protrusions for receiving the tin soldering roller
Dévidoir pour un rouleau de brasure en zinc avec des plaques latérales pouvant glissées relativement à une base et des protrusions pour recevoir le rouleau de brasure en zinc

(30) Priorität: 19.02.2008 CH 2272008
(43) Veröffentlichungstag der Anmeldung: 26.08.2009
(73) Patentinhaber: Bräm, Markus, 5453 Remetschwil (CH)
(72) Erfinder: Bräm, Markus, 5453 Remetschwil (CH)
(74) Vertreter: Fenner, Werner

(56) Entgegenhaltungen:
- EP-A- 0 826 618
- FR-A- 2 815 949
- JP-A- 2001 210 670
- JP-U- 1 109 068
- US-A- 5 551 645
- US-A1- 2002 175 985
- US-A1- 2003 098 253
- US-B1- 6 276 623

## Beschreibung

Die Erfindung betrifft eine Halterung für eine Lötzinnrolle nach dem Oberbegriff des Patentanspruchs 1 (siehe, z.B., US 5 551 645).

### STAND DER TECHNIK

Auf dem Markt sind Lötzinnabroller bekannt, bei welchen eine Lötzinnrolle auf einen Dorn aufgesteckt und mit einer mit Schraubengewinde versehenen Abschlusskappe auf dem Dom gehalten ist. Für die Führung des Lötzinndrahtes ist ein Röhrchen auf einem Halter vorgesehen. Ein anderer Lötzinnabroller besteht aus zwei auf einer Grundplatte befestigten Wänden, welche einen Rundstab halten, um eine Rolle darauf aufzunehmen. Diese bekannten Lötzinnabroller sind so ausgelegt, dass sie Rollen verschiedener Durchmesser aufnehmen können. Jedoch ist die maximale Breite der Rolle durch die Länge des Doms oder die Länge des Rundstabs gegeben. Ebenfalls ist es problematisch, wenn Rollen mit einer geringen Breite verwendet werden, da eine seitliche Führung der Rolle dann nicht mehr gegeben ist.

Die US-A-5 551 645 betrifft eine Aufspul- und Abwickelvorrichtung für eine Angelschnur einer Fischerangel, mit einer mittels Saugnapf am Boden befestigbaren Halterung, die zwei hochstehende Seitenplatten aufweist, zwischen denen eine mit einer Angelschnur versehene Spule an einer Kurbelwelle befestigt ist.

Die US 200310098253 A1 vermittelt eine in einer halbkreisförmigen Führung einer Halterung einseitig angeordnete Bindedraht-Spule, die durch eine auf den geführten Flansch der Spule einwirkende Rückhaltevorrichtung gesichert ist.

Die US 6 276 623 B1 beschreibt einen Lötdraht-Halter für eine Lötdrahtspule, die seitliche Flanschen aufweist und auf eine Hohlwelle aufgesteckt ist, deren seitliche Enden die Spule überragen und in Nuten gegenüberliegender Seitenwände des Halters geführt sind.

Die US 2002/0175985 A1 betrifft einen Halter zur Aufnahme eines auf eine Trommel aufgewickelten bedruckbaren Bandes.

Die FR-A-2 815 949 betrifft eine Vorrichtung zum Abwickeln eines auf eine Spule aufgewickelten Fadens oder dgl. Dazu ist ein an einer Schiene aufhängbares, einseitig offenes Gehäuse vorgesehen, in das die Spule eingesetzt wird, so dass der eine Flansch der Spule an einer Aussenseite des Gehäuses ansteht und der andere, auf das gegenüberliegende Ende des Zylinders der Spule aufgesetzte Flansch in die ihm zugeordnete Seitenwand des Gehäuses zur achsialen Arretierung der Spule eingesteckt wird.

Die JP 01 109068 U vermittelt eine zwischen zwei beabstandeten Wänden eines Supports an einer Welle angeordnete Spule für Faden, der beim Abwickeln von der Spule eine mit dem Support verbundene Führungsöse durchsetzt.

### AUFGABE DER ERFINDUNG

Der vorliegenden Erfindung liegt die Aufgabe zugrunde, eine Halterung für eine Lötzinnrolle zu schaffen, welche für eine Vielzahl von Rollen mit verschiedenen Durchmessern und Breiten geeignet ist und die Rolle und den Lötzinndraht sicher führen lässt, ohne dabei ab der Rolle gleiten zu können.

### GEGENSTAND DER ERFINDUNG

Diese Aufgabe wird erfindungsgemäss nach den Merkmalen des Kennzeichens des Patentanspruchs 1 gelöst.

Die efindungsgemässe Halterung hat den grossen Vorteil, dass auf besonders einfache Art Lötzinnrollen verschiedener Durchmesser und Breite gehalten werden können und ein einwandfreies Abwickeln des Lötzinndrahtes gewährleistet ist. Aufgrund der massiven Ausführung bleibt die Halterung auch sehr stabil auf einer Unterlage wie einem Tisch stehen.

### BESCHREIBUNG EINES AUSFÜHRUNGSBEISPIELES DER ERFINDUNG

Weitere Vorteile der Erfindung ergeben sich aus den abhängigen Patentansprüchen und aus der nachfolgenden Beschreibung, in welcher die Erfindung anhand zweier in den schematischen Zeichnungen dargestellten Ausführungsbeispielen näher erläutert wird. Es zeigt:
- Fig. 1: eine perspektivische Ansicht einer ersten Ausführung einer Halterung für eine Lötzinnrolle,
- Fig. 2: eine andere perspektivische Ansicht der ersten Halterung,
- Fig. 3: die Einzelteile der ersten Halterung,
- Fig. 4: zwei übereinander gestapelten ersten Halterungen,
- Fig. 5: eine perspektivische Ansicht einer zweiten Ausführung einer Halterung,
- Fig. 6: eine Frontansicht der zweiten Halterung,
- Fig. 7: eine Rückansicht der zweiten Halterung,
- Fig. 8: die Einzelteile der zweiten Halterung, und
- Fig. 9: eine Kaskade von zwei übereinander gestapelten zweiten Halterungen.

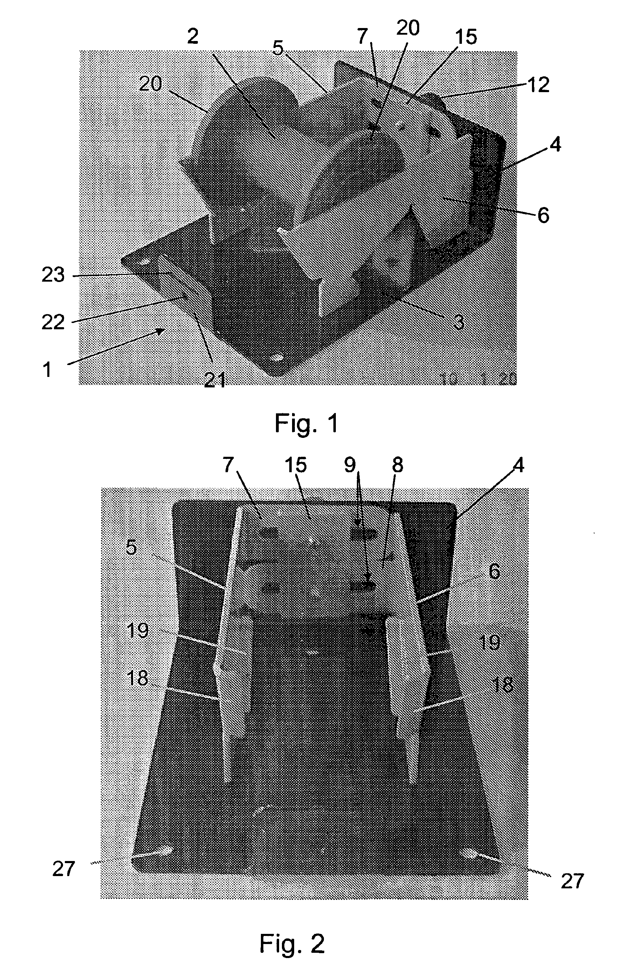

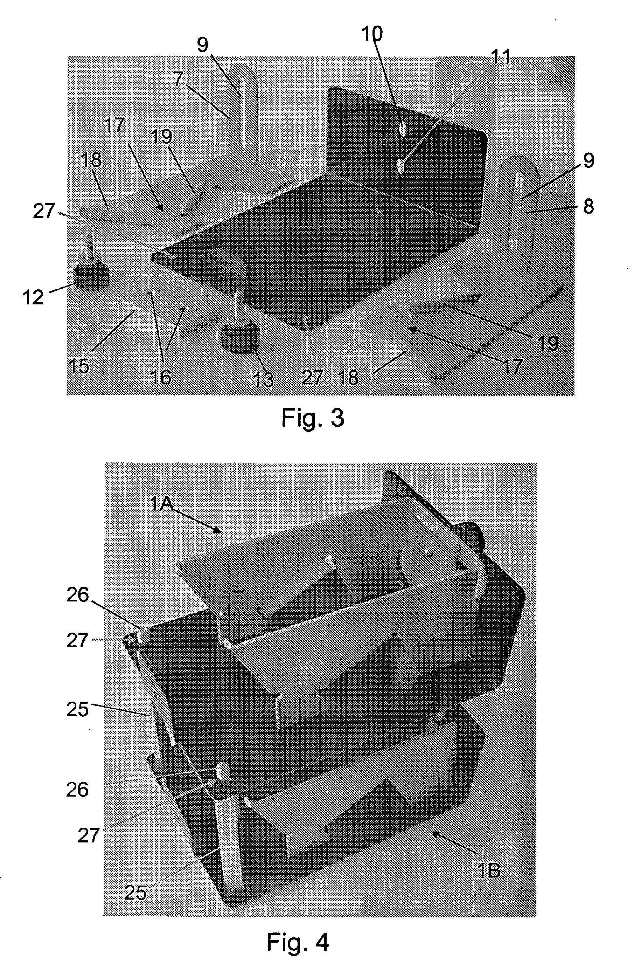

In den Figuren 1 bis 3 ist eine erste Halterung 1 für eine Lötzinnrolle 2 in perspektivischer Ansicht und in zerlegtem Zustand dargestellt. Die erste Halterung 1 weist eine Grundplatte 3 und eine daran angewinkelte Rückwand 4 auf. Auf der Grundplatte 1 sind zwei verschiebbare Seitenwände 5 und 6 vorgesehen, weiche je einen angewinkelten Schieber 7 bzw. 8 aufweisen. Die Schieber 7 und 8 sind versetzt zu einander an der jeweiligen Seitenwand 5 bzw. 6 angeordnet und weisen jeweils einen Längsschlitz 9 auf. Die Rückwand 4 weist zwei übereinander angeordnete Bohrungen 10 und 11 auf, in welcher oberen Bohrung 10 eine obere Feststellschraube 12 und in welcher unteren Bohrung 11 eine untere Feststellschraube 13 geführt ist. Die obere Feststellschraube 12 führt durch den Längsschlitz 9 des Schiebers 7 der - in den Figuren 1 und 2 - linken Seitenwand 5 und die untere Feststellschraube 13 führt durch den Längsschlitz 9 des Schiebers 8 der rechten Seitenwand 6. Die beiden Feststellschrauben 12 und 13 sind mittels einer Befestigungsplatte 15 mit übereinander angeordneten Schraubengewiriden 16 festgeschraubt. Durch den Längsschlitz 9 und die Feststellschrauben 12 und 13 ist gewährleistet, dass die Seitenwände 5 und 6 in jeder Position senkrecht zur Grundplatte 3 stehen. Die Seitenwände 5 und 6 weisen, gemäß der Erfindung, ferner einen winkelförmigen Vorsprung 17 auf, der von zwei gebördelten Rändem 18 und 19 der Seitenwände 4 und 5 gebildet ist. In den Vorsprüngen 17 der beiden Seitenwände 4 und 5 können nun beide Flanschen 20 der Lötzinnrolle 2 hineingelegt werden, so dass der - hier nicht dargestellte - Lötzinndraht von der Rolle 2 abgewickelt werden kann. Durch den winkelförmigen Vorsprung 17 kann eine Lötzinnrolle von fast jeglicher Grösse zwischen den beiden Seitenwänden 4 und 5 aufgenommen werden. Auf dem - in den Figuren 1 bis 3 gesehen - vorderen Rand der Grundplatte 3 ist eine kleine angewinkelte, Platte 21 mit einem Führungsloch 22 für den Lötzinndraht angebracht. Weiterhin ist ein parallel zur Grundplatte 3 angeordneter Längsschlitz 23 in der Platte 21 vorgesehen, welcher als Führung für den Lötzinndraht dienen kann. Wie aus Figur 3 ersichtlich, sind die Feststellschrauben 12 und 13 als Rändelschrauben ausgebildet, so dass die Schieber 7 und 8 manuell, ohne ein Werkzeug, in beliebigen Rastpositionen festgestellt und wieder gelöst werden können, um die richtige Einstellung für die jeweilige Lötzinnrolle 2 zu ermöglichen.

In Figur 4 sind zwei übereinander gestapelt angeordnete Halterungen 1A und 1B ersichtlich, wie sie in den Figuren 1 bis 3 dergestellt sind. Um die beiden Halterungen 1A und 1B zu stapeln, sind auf der Grundplatte 3 der unteren Halterung 3A drei Sechskant-Stäbe 25 mit je einem Schraubengewindestumpf 26 vorgesehen, die in eine entsprechende Bohrung 27 (siehe auch Figuren 2 und 3) in der Grundplatte 3 der oberen Haltering 1B passen und mittels - hier nicht dargestellten - Schrauben befestigt werden. Die Sechskant-Stäbe 25 sind in einem gleichschenkeligen Dreieck angeordnet.

Es versteht sich für den Fachmann, dass die Schieber 6 und 7 derart ausgebildet sein können, dass sie in vorgegebenen Rastpositionen bringbar sind. Dazu können eine sägezahnartige Riffelung auf der Aussenseite der Schieber 6 und 7 und eine solche Riffelung auf der Innenseite der Rückwand 4 angebracht sein.

Die Halterung 1 ist mit Vorteil aus einem rostfreien Stahl hergestellt, und weist an der Unterseite der Grundplatte 3 an den vier Ecken Gumminoppen auf, so dass die Halterung 1 sehr stabil auf einer Unterlage wie einem Tisch stehen kann.

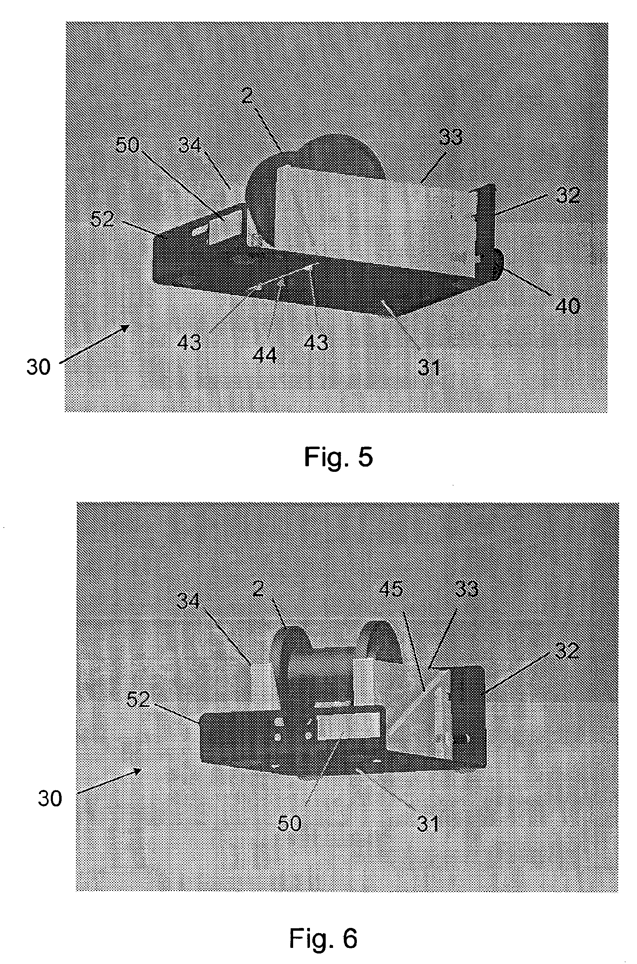

In den Figuren 5 bis 8 ist eine zweite Halterung 30 für eine Lötzinnrolle 2 in perspektivischer Ansicht und in zerlegtem Zustand dargestellt. Die Halterung 30 weist eine Grundplatte 31 und eine daran angewinkelte Rückwand 32 auf. Auf der Grundplatte 31 sind zwei verschiebbare, gleich ausgebildete Seitenwände 33 und 34 vorgesehen, welche oben eine Bohrung mit einem T-förmigen Schlitz 35 mit der Schlitzöffnung rechts und unten eine Bohrung mit einem gegengleichen T-förmigen Schlitz 36 mit der Schlitzöffnung links aufweisen. Im Balken des T-förmigen Schlitzes 35 bzw. 36 kann eine Einlegemutter eingelegt werden, um eine Rändelschraube 40 unten (rechte Seitenwand 33) oder oben (linke Seitenwand 34) einzuschrauben. In der Rückwand 32 der Grundplatte 31 sind zwei parallele und zur Grundplatte 31 waagrechte Schlitze 41 und 42 angebracht. Im oberen Schlitz 41, sind ein Nocken und eine Rändelschraube 40 und im unteren Schlitz 42 sind ein Nocken und eine Rändelschraube geführt. Ferner weisen die beiden Seitenwände 33 und 34 auf der Unterseite jeweils einen Führungsnocken auf, die in einem Schlitz 44 in der Grundplatte 31 geführt sind. Damit ist eine stabile Führung und eine präzise senkrechte Anordnung der beiden Seitenwände 33 und 34 bezüglich der Grundplatte 31 und der Rückwand 32 gewährleistet. Die Seitenwände 33 und 34 sind hier ebenfalls mit einem winkelförmigen Vorsprung 45 versehen, um eine Lötzinnrolle 2 darin zu halten.

In diesem Fall ist die Grundplatte 31 aus einer lackierten Stahlplatte gefertigt und sind die beiden Seitenwände 33 und 34 aus einem geeigneten Hartkunststoff wie Polyamid oder Polyurethan hergestellt. Bei dieser zweiten Halterung 30 kann auch eine dritte mittlere Wand - hier nicht dargestellt - eingesetzt werden, welche beidseitig einen winkelförmigen Vorsprung aufweist, so dass auf einer Halterung zwei kleinere Lötzinnrollen eingesetzt werden können.

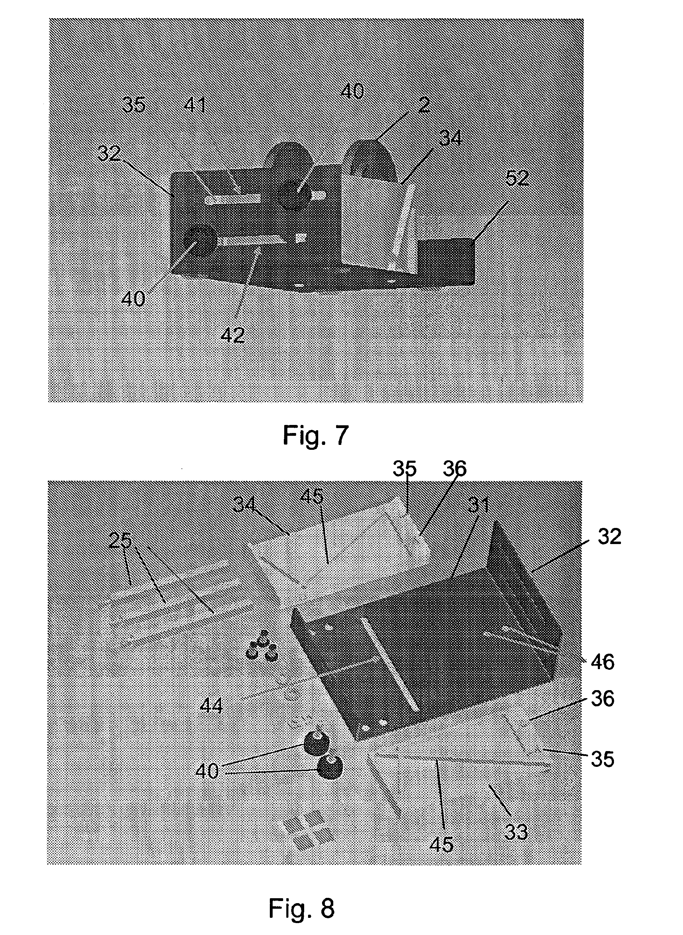

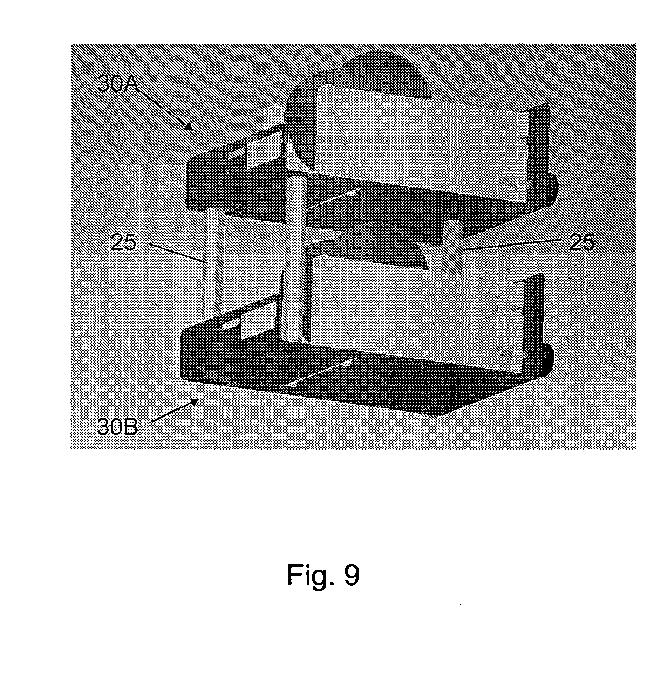

Wie in Figur 9 dargestellt, können wiederum zwei Halterungen 30A und 30B mittels Sechskant-Stäben 25 übereinander gestapelt werden, um mehrere Lötzinnrollen 2 beispielsweise verschiedener Lötdrahtdurchmesser einsetzen zu können. Da in der Grundplatte 31 paarweise Löcher 46 (vgl. Figur 8) vorgesehen sind, können beliebig viele Halterungen 30 übereinander gestapelt werden.

Ferner kann ein abnehmbares Magnetband 50 zur Beschriftung auf der aufstehenden Frontplatte 52 der Grundplatte 31 vorgesehen sein.

## Patentansprüche

1. Halterung (1; 1A, 1B; 30, 30A, 30B) für eine Lötzinnrolle (2) mit seitlichen Flanschen (20), mit einer Grundplatte und zwei aufstehenden Seitenwänden (5, 6, 33, 34) die bezüglich der Grundplatte (3) verschiebbar und feststellbar sind, **dadurch gekennzeichnet, dass** die Seitenwände (5, 6) jeweils einen winkelförmig Vorsprung (17) aufweisen, der von zwei gebördelten Rändern (18, 19) der Seitenwände (4,5) gebildet ist, die die Flansche (20) der Lötzinnrolle (2) am Umfang stützend) aufnehmen.

2. Halterung nach Anspruch 1, **dadurch gekennzeichnet, dass** die Grundplatte (3) mit einer aufstehenden Rückwand (4) versehen ist, und die verschiebbaren Seitenwände (5, 6) mit einem senkrecht dazu angeordneten Schieber (7, 8) versehen sind, welcher mittels einer Feststellschraube (12, 13) in der jeweiligen Rastposition gehalten ist.

3. Halterung nach Anspruch 2, **dadurch gekennzeichnet, dass** der Schieber (7, 8) einen Längsschlitz (9) aufweiset, in welcher die Feststelischraube (12, 13) geführt ist, und die beiden Schieber (7, 8) derart bezüglich einander an der jeweiligen Seitenwand (5, 6) angebracht sind, dass sie übereinander an der aufstehenden Rückwand (4) geführt sind.

4. Halterung nach Anspruch 2 oder 3, **dadurch gekennzeichnet, dass** die Feststellschrauben (12, 13) mittels einer mit übereinander angeordneten Gewinden (16) versehenen Befestigungsplatte (15) an den Schieber (7, 8) feststellbar sind.

5. Halterung nach Anspruch 4, **dadurch gekennzeichnet, dass** die Feststellschraube (12, 13) eine Rändelschraube ist.

6. Halterung nach einem der Ansprüche 1 bis 5, **dadurch gekennzeichnet, dass** auf der Grundplatte (3) eine aufstehende Platte (21) mit einer FührungsÖffnung (22) für den Lötzinndraht angebracht ist.

7. Halterung nach Anspruch 1, **dadurch gekennzeichnet, dass** die Grundplatte (31) mit einer aufgestellten Rückwand (32) versehen ist, in welcher parallele und zur Grundplatte waagrechte Schlitze (41, 42) vorgesehen sind, und die Seitenwände (33, 34) auf der Rückseite einen Nocken und ein Schraubengewinde aufweisen, in welche eine Rändelschraube (40) geschraubt ist, welche in den Schlitzen geführt sind.

8. Halterung nach Anspruch 7, **dadurch gekennzeichnet, dass** die Seitenwände (33, 34) auf der Unterseite einen Führungsnocken aufweisen, der in einem Schlitz (44) in der Grundplatte geführt ist.

9. Halterung nach Anspruch 7 oder 8, **dadurch gekennzeichnet, dass** die Seitenwände (33, 34) aus einem Hartkunststoff gefertigt sind.

10. Halterung (1 B; 30B) nach einem der Ansprüche 1 bis 9, **dadurch gekennzeichnet, dass** die Grundplatte (3; 31) mit in einem Dreieck angeordneten Stäbe (25) mit einem vorstehenden Schraubengewindestumpf (26) vorgesehen sind, um eine zweite Halterung (1A; 30A) darüber anzubringen.

## Claims

1. Holder (1; 1A, 1B; 30, 30A, 30B) for a solder roller (2) with lateral flanges (20), comprising a base plate and two vertical side walls (5, 6; 33, 34) which are displaceable relative to the base plate (3) and can be fixed in position, **characterised in that** the side walls (5, 6) each have an angular projection (17) formed by two flanged edges (18, 19) of the side walls (4, 5) receiving the flanges (20) of the solder roller (2) in such a manner that they are supported at the circumference.

2. Holder according to claim 1, **characterised in that** the base plate (3) is provided with a vertical rear wall (4) and the displaceable side walls (5, 6) are provided with a slide (7, 8) arranged perpendicularly thereto and held in the respective locked position by means of a locking screw (12, 13).

3. Holder according to claim 2, **characterised in that** the slide (7, 8) comprises a longitudinal slot (9) in which the locking screw (12, 13) is guided and the two slides (7, 8) are mounted relative to one another on the respective side wall (5, 6) in such a manner that they are guided one above the other on the vertical rear wall (4).

4. Holder according to claim 2 or claim 3, **characterised in that** the locking screws (12, 13) can be fixed to the slide (7, 8) by means of a mounting plate (15) provided with threads (16) arranged one above the other.

5. Holder according to claim 4, **characterised in that** the locking screw (12, 13) is a knurled screw.

6. Holder according to one of claims 1 to 5, **characterised in that** a vertical plate (21) with a guide opening (22) for the solder wire is mounted on the base plate (3).

7. Holder according to claim 1, **characterised in that** the base plate (31) is provided with a vertical rear wall (32) in which parallel slots (41, 42) disposed horizontally relative to the base plate are provided and the side walls (33, 34) are provided on their rear faces with a cam and a screw thread into which a knurled screw (40) guided in the slots is screwed.

8. Holder according to claim 7, **characterised in that** the side walls (33, 34) are provided on their undersides with a guide cam guided in a slot (44) in the base plate.

9. Holder according to claim 7 or claim 8, **characterised in that** the side walls (33, 34) are made of a hard plastic.

10. Holder (1B; 30B) according to one of claims 1 to 9, **characterised in that** the base plate (3; 31) is provided with rods (25) with projecting threaded stubs (26) arranged in a triangle in order to mount a second holder (1A; 30A) thereabove.

## Revendications

1. Support (1 ; 1A, 1B ; 30, 30A, 30B) destiné à un rouleau (2) d'étain à braser muni de flasques latéraux (20), comprenant une plaque d'embase et deux parois latérales (5, 6 ; 33, 34) se dressant verticalement, aptes à coulisser et à être arrêtées par rapport à ladite plaque d'embase (3), **caractérisé par le fait que** les parois latérales (5, 6) sont respectivement pourvues d'une protubérance (17) configurée en cornière et formée par deux bords repliés (18, 19) desdites parois latérales (5, 6), qui reçoivent les flasques (20) du rouleau (2) d'étain à braser avec appui sur le pourtour.

2. Support selon la revendication 1, **caractérisé par le fait que** la plaque d'embase (3) est dotée d'une paroi postérieure (4) se dressant verticalement, et les parois latérales coulissantes (5, 6) sont pourvues d'une coulisse (7, 8) qui est disposée perpendiculairement à ladite paroi et est retenue, au moyen d'une vis d'arrêt (12, 13), à l'emplacement de crantage considéré.

3. Support selon la revendication 2, **caractérisé par le fait que** la coulisse (7, 8) présente une fente longitudinale (9) dans laquelle la vis d'arrêt (12, 13) est guidée, et les deux coulisses (7, 8) sont montées l'une vis-à-vis de l'autre, sur la paroi latérale (5, 6) considérée, de façon à être guidées en superposition sur la paroi postérieure (4) se dressant verticalement.

4. Support selon la revendication 2 ou 3, **caractérisé par le fait que** les vis d'arrêt (12, 13) peuvent être bloquées à demeure, sur la coulisse (7, 8), au moyen d'une platine de fixation (15) munie de filetages (16) placés en superposition.

5. Support selon la revendication 4, **caractérisé par le fait que** la vis d'arrêt (12, 13) est une vis à moletage.

6. Support selon l'une des revendications 1 à 5, **caractérisé par le fait qu'**une platine (21) se dressant verticalement, munie d'un orifice (22) de guidage du fil d'étain à braser, est implantée sur la plaque d'embase (3).

7. Support selon la revendication 1, **caractérisé par le fait que** la plaque d'embase (31) est dotée d'une paroi postérieure relevée (32) dans laquelle sont prévues des fentes parallèles (41, 42), horizontales par rapport à ladite plaque d'embase, et les parois latérales (33, 34) offrent, à la face postérieure, un mentonnet et un filetage dans lesquels est vissée une vis (40) à moletage qui est guidée dans lesdites fentes.

8. Support selon la revendication 7, **caractérisé par le fait que** les parois latérales (33, 34) présentent, à la face inférieure, un mentonnet de guidage guidé dans une fente (44) pratiquée dans la plaque d'embase.

9. Support selon la revendication 7 ou 8, **caractérisé par le fait que** les parois latérales (33, 34) sont produites en une matière plastique dure.

10. Support (1B ; 30B) selon l'une des revendications 1 à 9, **caractérisé par le fait que** la plaque d'embase (3 ; 31) comporte des tiges (25) agencées en un triangle et munies d'un embout saillant de vissage (26), en vue du montage d'un second support (1A ; 30A) en superposition.
